# EUROPEAN PATENT APPLICATION

(11) **EP 4 327 908 A1**
(43) Date of publication of application: **28.02.2024**
(21) Application number: 22868910.5
(22) Date of filing: 12.08.2022
(51) Int. Cl.: B01D 15/08, C01D 15/00, C22B 26/12, C22B 7/00

(54) **METHOD FOR LITHIUM ADSORPTION IN CARBONATE- AND/OR SULFATE-CONTAINING SOLUTION**

(30) Priority: 17.09.2021 CN 202111095253
(71) Applicant: Sunresin New Materials Co. Ltd., Xi'an, Shaanxi 710075 (CN)
(72) Inventor: LI, Suidang, Xi'an, Shaanxi 710075 (CN); GUO, Fumin, Xi'an, Shaanxi 710075 (CN); GAO, Wenjin, Xi'an, Shaanxi 710075 (CN); JIAO, Pengwei, Xi'an, Shaanxi 710075 (CN); LIU, Qiong, Xi'an, Shaanxi 710075 (CN); YU, Jia, Xi'an, Shaanxi 710075 (CN); BIAN, Weina, Xi'an, Shaanxi 710075 (CN); CHU, Kaile, Xi'an, Shaanxi 710075 (CN); WANG, Yao, Xi'an, Shaanxi 710075 (CN); KOU, Xiaokang, Xi'an, Shaanxi 710075 (CN)
(74) Representative: J A Kemp LLP
(86) International application number: PCT/CN2022/111979
(87) International publication number: WO 2023/040534

(57) **Abstract**

A method for lithium adsorption in a carbonate- and/or sulfate-containing solution, comprising using an aluminum-based lithium adsorbent for adsorption of lithium ions in the carbonate- and/or sulfate-containing solution, after the adsorption is saturated, using a weakly acidic high-concentration salt solution to transform the adsorbent, desorbing the transformed adsorbent by means of a low-concentration salt solution or water, and entering the next cycle for operation.

## Description

### CROSS-REFERENCE TO RELATED APPLICATION

The present application claims the priority of Chinese patent application submitted to the China National Intellectual Property Administration of the People's Republic of China on September 17, 2021, with application number 202111095253.8 and invention title "METHOD FOR LITHIUM ADSORPTION IN CARBONATE- AND/OR SULFATE-CONTAINING SOLUTION", and its entire content is incorporated in the present application by reference.

### FIELD OF THE INVENTION

The present application belongs to the field of lithium resource extraction technology, specifically to a lithium adsorption method in a carbonate-containing solution and/or a sulfate-containing solution.

### BACKGROUND OF THE INVENTION

In recent years, with the development of the new energy industry and lithium battery industry, the demand for lithium has been increasing. Enterprises producing lithium salts and metal lithium products are increasingly important in the new energy industry chain, and the scientific production of lithium mines containing sulfate and carbonate is also more important.

Lithium mines containing sulfate and carbonate are mainly produced in salt lakes, and the current mining techniques mainly include chemical precipitation method, solvent extraction method, calcination method, adsorption method, etc.

The chemical precipitation method mainly uses brine as the raw material, utilizes natural solar energy and heat sources to condense and evaporate in the pre drying tank and drying tank, produces precipitation of various by-products, and increases the concentration of lithium ions in the brine. The obtained lithium-rich brine absorbs solar energy in the crystallization tank to increase the temperature of the brine, gradually causing lithium carbonate to crystallize and precipitate. The crystallization product is dried and packaged to obtain lithium concentrate products. The main problem with this production method is the long production cycle, the need to build a large number of brine tanks, and the high investment cost.

Solvent extraction method utilizes the difference in solubility or distribution coefficient of solutes in the aqueous and organic phases to transfer solutes from the aqueous phase to the organic phase with high solubility for solutes, thus achieving the purpose of solute phase separation. Tributyl phosphate (TBP) is a typical neutral organic phosphorus extractant used for lithium extraction from salt lake brine. The commonly used extraction system is TBP-FeCl₃-MIBK, and the reaction mechanism is as follows: the extraction principle of this extraction system is that iron salt can form a complex LiFeCl₄ with highly polar LiCl in brine. The TBP/FeCl₃ system has high selectivity for Li⁺, and the extraction order for common cations in brine is: H⁺ >Li⁺ >> Mg²⁺ > Na⁺. Moreover, the presence of boron in brine is conducive to the extraction of Li⁺, and this system can selectively extract Li⁺ from solutions with high Mg/Li ratio. The main drawback of this production method is that extraction requires a large amount of acid and alkali, and the extraction liquid is organic, which is harmful to the natural environment of ecologically weak areas such as Qinghai and Tibet.

The calcination method production process is a technology proposed for brine with high magnesium/lithium ratio. Due to the fact that the old brine is a saturated solution of lithium rich bischofite, which decomposes into magnesium oxide and hydrogen chloride gas above 550 °C, lithium chloride does not decompose under this condition. After calcination, the sintered material is leached, and lithium salts are easily soluble in water before entering the solution. There are impurities such as sulfate ions, magnesium, and a small amount of boron in the leaching solution. After purification, the filtrate is evaporated, precipitated with alkali, and dried to obtain lithium carbonate products. The main problems with this method are high energy consumption, a large amount of corrosive hydrogen chloride gas produced in the production process, high equipment requirements, and unfriendly environment.

The adsorption method uses manganese-based and titanium-based adsorbents to adsorb lithium in brine. After adsorption saturation, the adsorbent is regenerated using acid. After the regenerated solution is cleaned of impurities, sodium carbonate is used to react with it to produce lithium carbonate. The problem with this method is that manganese-based and titanium-based adsorbents are prone to solution loss, resulting in a decline in the performance of the resin. Due to the problem of solution loss, metals such as manganese and titanium are introduced into the qualified solution, affecting the purity of the product. The use of aluminum-based adsorbent in solutions containing sulfate and/or carbonate can result in significant degradation of adsorption performance, making it unusable in production.

### SUMMARY

In the prior art, in solutions containing sulfate or/and carbonate, the lithium ions in the solution are adsorbed by aluminum-based adsorbents and exist in the form of lithium carbonate or lithium sulfate, resulting in strong binding force with the adsorbent and difficulty in regeneration of the adsorbent, leading to a significant decline in adsorption performance. If certain measures are taken to reduce the binding force between lithium carbonate or lithium sulfate and resin, the problem of performance degradation of aluminum-based lithium adsorbents can be solved. Through the research of the inventors, it was found that when aluminum-based adsorbents adsorb lithium in a carbonate-containing solution and/or a sulfate-containing solution, the carbonate or sulfate adsorbed by aluminum-based lithium adsorbents can be converted into lithium bisulfate, lithium bicarbonate, lithium chloride or lithium nitrate with weak binding force using a weakly acidic high concentration salt solution, such as the salt solution with the controlled pH value in the range of pH 3-7 and preferably in the range of pH 4-6. Afterwards, lithium in the aluminum-based adsorbents can be desorbed using a low concentration salt solution or water to complete the regeneration of the adsorbent.

The present application discloses a lithium adsorption method in a carbonate-containing solution and/or a sulfate-containing solution, wherein the lithium adsorption method adopts an aluminum-based lithium adsorbent for the adsorption of lithium ions in a carbonate-containing solution and/or a sulfate-containing solution, after saturation of adsorption, a weakly acidic high concentration salt solution is used to transform the adsorbent. After transformation, the adsorbent can recover its adsorption performance by using a low concentration salt solution or water desorption, and enter the next cycle of operation.

In order to achieve the purpose of the present application, the technical solution adopted in the present application is:
Lithium adsorbents are derived from aluminum-based lithium adsorbents prepared by the method provided in patent CN102631897B or commercially available aluminum-based lithium adsorbents of the same type.

Optionally, the aluminum-based lithium adsorbent prepared by the method provided in patent CN102631897B is prepared by the following steps:
① preparation of precursor:
   preparing of precursor for lithium adsorbent resin - a molecular sieve or an ion sieve type lithium adsorbent precursor;
   a method for preparing the molecular sieve type lithium adsorbent precursor comprises: firstly, preparing metal oxygen-containing compounds into spherical bead particles, and then using an activation process to make them have the function of adsorbing lithium ions, wherein the molar ratio of lithium to other metals in the lithium adsorbent formed after activation is between (1-5): 1;
② preparation of dispersed phase:
   mixing evenly the precursor prepared above with an adhesive and a pore forming agent to prepare a dispersed phase; wherein the amount of the adhesive added accounts for 10-80% of the total weight of the dispersed phase; and the pore forming agent accounts for 10% to 200% of the total weight of a monomer;
   when the adhesive is a polymerizable monomer, adding an initiator, a thickener, and a pore forming agent at the same time, wherein the added initiator accounts for 0.1-5% of the total weight of the monomer; the proportion of the thickener to the total weight of the dispersed phase is 1-10%; and the pore forming agent accounts for 10% to 200% of the total weight of the monomer;
   when the adhesive is a polymer with high molecular weight, adding a curing agent or controlling the temperature to cure it, wherein the amount of the curing agent added accounts for 0.001% to 2% of the weight of the adhesive; when the adhesive is a small molecule substance with two self-condensable functional groups or a combination of two small molecule substances with mutual-condensable functional groups, adding a catalyst, wherein the amount of the catalyst added accounts for 0.001-50% of the weight of the adhesive;
③ preparation of continuous phase:
   preparing a continuous phase that is incompatible with the dispersed phase;
   wherein the volume of the continuous phase is 1-10 times that of the dispersed phase, with the addition amount of the dispersant accounting for 0.01-10% of the total weight of the continuous phase;
④ preparation and curing of lithium adsorbent resin:
   adding the dispersed phase in step (2) into the continuous phase prepared in step (3), adjusting the stirring rate so that the dispersed phase "suspends" in the continuous phase and disperses into spherical beads of appropriate size; after stabilization, maintaining the stirring rate unchanged, and curing the spherical beads into spherical particles by adjusting the temperature or adding the curing agent or the catalyst; wherein the particle size of the spherical particles is in a range of 0.3 millimeters to 2.0 millimeters;
(5) washing and treating:
   filtering the cured spherical particles, and using solvents, acetone, ethanol, toluene, or gasoline, to wash the dispersants and the pore forming agents in the spherical particles; placing the washed spherical particles containing metal hydroxides in a lithium halide solution with a pH in a range from 1.5 to 10, and performing activation treatment at 60-120 °C to obtain a lithium adsorbent resin containing LiCl·mM(OH)₃·nH₂O matrix; alternatively, performing column treatment to a resin containing manganese dioxide, iron oxide and titanium oxide as ion sieve type precursor with a solution having pH of 0 to 5, and then washing to neutral to obtain the ion sieve type lithium adsorbent resin.

Optionally, the weakly acidic high concentration salt solution used in the present invention can be formed by adopting one or more of zinc chloride, copper chloride, zirconia chloride, sodium chloride, potassium chloride, magnesium chloride, calcium chloride, aluminum chloride, ammonium magnesium sulfate, zinc sulfate, sodium sulfate, potassium sulfate, magnesium sulfate, copper sulfate, magnesium nitrate, sodium nitrate, potassium nitrate, calcium nitrate, copper nitrate and zinc nitrate, and adjusting the pH with acid.

Optionally, the acid used for adjusting can be one or more of boric acid, hydrochloric acid, acetic acid, formic acid, sulfuric acid, nitric acid, phosphoric acid, adipic acid, glutaric acid, tartaric acid, oxalic acid, malic acid, benzoic acid, salicylic acid, caffeic acid and citric acid.

Optionally, the transformation process can use weakly acidic high concentration salt solutions for repeated use. The pH range of weakly acidic high concentration salt solutions is pH 3-7, and the optional pH range is pH 4-6. The concentration of the salt solution is greater than 150g/L; optionally, the salt solution concentration is greater than 200g/L.

Optionally, the transformed lithium adsorbent can be desorbed using low concentration salt solution or water. Generally, the concentration of the salt solution is lower than 20g/L, and optionally, the salt concentration is lower than 5g/L. Preferably, use of pure water for desorption can reduce the introduction of impurities.

Optionally, the above method can be applied to the production by combining this technology with the use of a continuous ion exchange device mentioned in patent CN102031368B entitled "continuous ion exchange device and method for extracting lithium from salt lake brine".

Optionally, the feed main pipe includes an adsorption feed main pipe, a transformation feed main pipe, and a rinsing feed main pipe, a desorption feed main pipe, and a top water feed main pipe. Wherein the resin columns in each step can be single column adsorption, parallel adsorption, or series adsorption, and for the number of resin column(s), single-column mode or multi-column mode can be adopted according to production capacity and other requirements.

### DETAILED DESCRIPTION

The following is a further description of the present application in conjunction with examples, which are not limited to the scope of protection of the present application.

### Example 1

Index of a certain sulfate brine:

| raw materials | K⁺ | Na⁺ | Mg²⁺ | Ca²⁺ | Li⁺ | CL⁻ | SO₄²⁻ | CO₃²⁻ | pH |
|---|---|---|---|---|---|---|---|---|---|
| content (g/L) | 5.5 | 77 | 8.2 | 1.3 | 0.82 | 104 | 35.54 | 1.07 | 8.2 |

The aluminum-based lithium adsorbent prepared in Example 2 of Patent CN102631897B was saturated with the aforementioned brine for adsorption. The experimental results showed that the adsorption capacity of the adsorbent was 3.2g/L, and the following experiments were conducted to compare the desorption effects of the adsorbent.

| No. | Comparison conditions | Lithium concentration in the desorption solution |
|---|---|---|
| 1 | Transformation is performed directly using 8BV of pure water for desorption without using weakly acidic salt solution. | 0.54g/L |
| 2 | Hydrochloric acid is used to adjust 3BV of the acidic saturated magnesium chloride with pH of 5.2 for transformation, and then 8BV of 20g/L sodium chloride solution is used for desorption. | 3.18g/L |
| 3 | Boric acid is used to adjust 3BV of the acidic saturated zinc chloride with pH of 5.2 for transformation, and then 8BV of pure water is used for desorption. | 3.01g/L |
| 4 | Nitric acid is used to adjust 3BV of the acidic saturated sodium chloride with pH of 5.2 for transformation, and then 8BV of pure water is used for desorption. | 3.17g/L |
| 5 | Acetic acid is used to adjust 3BV of the acidic saturated zirconia chloride with pH of 5.2 for transformation, and then 8BV of 10g/L of sodium sulfate solution is used for desorption. | 2.96g/L |
| 6 | Formic acid is used to adjust 3BV of the acidic saturated calcium chloride with pH of 5.2 for transformation, and then 8BV of pure water is used for desorption. | 2.57g/L |
| 7 | Phosphoric acid is used to adjust 3BV of the acidic saturated copper chloride with pH of 5.2 for transformation, and then 8BV of 5g/L zinc chloride solution is used for desorption. | 2.99g/L |
| 8 | Sulfuric acid is used to adjust 3BV of the acidic saturated aluminum chloride with pH of 5.2 for transformation, and then 8BV of 2g/L magnesium chloride solution is used for desorption. | 2.66g/L |
| 9 | Adipic acid is used to adjust 3BV of the acidic saturated sodium sulfate with pH of | 2.36g/L |
| | 5.2 for transformation, and then 8BV of pure water is used for desorption. | |
| 10 | Glutaric acid is used to adjust 3BV of the acidic saturated potassium sulfate with pH of 5.2 for transformation, and then 8BV of pure water is used for desorption. | 2.27g/L |
| 11 | Malic acid is used to adjust 3BV of the acidic saturated magnesium sulfate with pH of 5.2 for transformation, and then 8BV of pure water is used for desorption. | 1.59g/L |
| 12 | Salicylic acid is used to adjust 3BV of the acidic saturated copper sulfate with pH of 5.2 for transformation, and then 8BV of pure water is used for desorption. | 2.31g/L |
| 13 | Benzoic acid is used to adjust 3BV of the acidic saturated sodium nitrate with pH of 5.2 for transformation, and then 8BV of pure water is used for desorption. | 1.71 g/L |
| 14 | Hydrochloric acid is used to adjust 3BV of the acidic saturated potassium nitrate with pH of 5.2 for transformation, and then 8BV of pure water is used for desorption. | 1.90 g/L |
| 15 | Phosphoric acid is used to adjust 3BV of the acidic saturated copper nitrate with pH of 5.2 for transformation, and then 8BV of pure water is used for desorption. | 1.97 g/L |
| 16 | Sulfuric acid is used to adjust 3BV of the acidic saturated magnesium nitrate with pH of 5.2 for transformation, and then 8BV of pure water is used for desorption. | 1.83 g/L |

From Example 1, it can be seen that in a certain sulfate brine environment, without the use of adsorbents with weakly acidic salt solution for transformation, it cannot be well desorbed, and the transformation effects of different weakly acidic salt solutions also have certain differences.

### Example 2

Index of a certain carbonate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 9.77 | 68.9 | 0.37 | 0.92 | 1.03 | 94 | 3.54 | 23.4 | 9.4 |

The aluminum-based lithium adsorbent prepared in Example 5 of Patent CN102631897B was saturated with the aforementioned brine for adsorption. The experimental results showed that the adsorption capacity of the adsorbent was 3.57g/L, and the following experiments were conducted to compare the desorption effects of the adsorbent.

| No. | Comparison conditions | Lithium concentration in the desorption solution |
|---|---|---|
| 1 | Transformation is performed directly using 8BV of pure water for desorption without using acidic salt. | 0.47g/L |
| 2 | Oxalic acid is used to adjust 3BV of the acidic saturated magnesium chloride with pH of 5.2 for transformation, and then 8BV of 20g/L fresh water is used for desorption. | 3.52g/L |
| 3 | Sulfuric acid is used to adjust 3BV of the acidic saturated zinc chloride with pH of 5.2 for transformation, and then 8BV of pure water is used for desorption. | 3.49g/L |
| 4 | Citric acid is used to adjust 3BV of the acidic saturated sodium chloride with pH of 5.2 for transformation, and then 8BV of pure water is used for desorption. | 3.53g/L |
| 5 | Tartaric acid is used to adjust 3BV of the acidic saturated zirconia chloride with pH of 5.2 for transformation, and then 8BV of 20g/L fresh water is used for desorption. | 2.41g/L |
| 6 | Nitric acid is used to adjust 3BV of the acidic saturated calcium chloride with pH of 5.2 for transformation, and then 8BV of pure water is used for desorption. | 3.01g/L |
| 7 | Boric acid is used to adjust 3BV of the acidic saturated copper chloride with pH of 5.2 for transformation, and then 8BV of 5g/L fresh water is used for desorption. | 3.47g/L |
| 8 | Phosphoric acid is used to adjust 3BV of the acidic saturated aluminum chloride with pH of 5.2 for transformation, and then 8BV of 2g/L fresh water is used for desorption. | 2.99g/L |
| 9 | Caffeic acid is used to adjust 3BV of the acidic saturated sodium sulfate with pH of 5.2 for transformation, and then 8BV of pure water is used for desorption. | 2.75g/L |
| 10 | Benzoic acid is used to adjust 3BV of the acidic saturated potassium sulfate with pH of 5.2 for transformation, and then 8BV of pure water is used for desorption. | 2.47g/L |
| 11 | Adipic acid is used to adjust 3BV of the acidic saturated magnesium sulfate with pH of 5.2 for transformation, and then 8BV of pure water is used for desorption | 1.83g/L |
| 12 | Glutaric acid is used to adjust 3BV of the acidic saturated copper sulfate with pH of 5.2 for transformation, and then 8BV of pure water is used for desorption. | 2.44g/L |
| 13 | Benzoic acid is used to adjust 3BV of the acidic saturated sodium nitrate with pH of 5.2 for transformation, and then 8BV of pure water is used for desorption. | 1.88 g/L |
| 14 | Hydrochloric acid is used to adjust 3BV of the acidic saturated potassium nitrate with pH of 5.2 for transformation, and then 8BV of pure water is used for desorption. | 2.03 g/L |
| 15 | Phosphoric acid is used to adjust 3BV of the acidic saturated copper nitrate with pH of 5.2 for transformation, and then 8BV of pure water is used for desorption. | 2.13 g/L |
| 16 | Sulfuric acid is used to adjust 3BV of the acidic saturated magnesium nitrate with pH of 5.2 for transformation, and then 8BV of pure water is used for desorption. | 1.99 g/L |

From Example 2, it can be seen that in a certain carbonate brine environment, without the use of adsorbents with weakly acidic salt solution for transformation, it cannot be well desorbed, and the transformation effects of different weakly acidic salt solutions also have certain differences.

### Example 3

Index of a certain sulfate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 5.5 | 77 | 8.2 | 1.3 | 0.82 | 104 | 35.54 | 1.07 | 8.2 |

The aluminum-based lithium adsorbent prepared in Example 8 of Patent CN102631897B was saturated with the aforementioned brine for adsorption. The experimental results showed that the adsorption capacity of the adsorbent was 3.2g/L, and the following experiments were conducted to compare the desorption effects of the adsorbents.

| No. | Comparison conditions | Lithium concentration in the desorption solution |
|---|---|---|
| 1 | 3BV of the acidic 230g/L magnesium chloride with pH of 7 is used for transformation, and then 8BV of pure water is used for desorption. | 1.33g/L |
| 2 | 3BV of the acidic 230g/L magnesium chloride with pH of 6.2 is used for transformation, and then 8BV of pure water is used for desorption. | 1.67g/L |
| 3 | 3BV of the acidic 230g/L magnesium chloride with pH of 5.8 is used for transformation, and then 8BV of pure water is used for desorption | 2.01g/L |
| 4 | 3BV of the acidic 230g/L magnesium chloride with pH of 5.5 is used for transformation, and then 8BV of pure water is used for desorption. | 2.76g/L |
| 5 | 3BV of the acidic 230g/L magnesium chloride with pH of 5 is used for transformation, and then 8BV of pure water is used for desorption. | 3.16g/L |
| 6 | 3BV of the acidic 230g/L magnesium chloride with pH of 4.7 is used for transformation, and then 8BV of pure water is used for desorption. | 3.19g/L |
| 7 | 1BV of the acidic 230g/L magnesium chloride with pH of 4.3 is used for cycle transformation, and the pH of the circulating solution was stabilized at 4.3 using boric acid. A total of 4BV was circulated, and then 8BV of pure water is used for desorption. | 3.11g/L |
| 8 | 3BV of the acidic 230g/L magnesium chloride with pH of 4 is used for transformation, and then 8BV of pure water is used for desorption. | 3.06g/L |
| 9 | 3BV of the acidic 230g/L magnesium chloride with pH of 3 is used for transformation, and then 8BV of pure water is used for desorption. | 3.11g/L |

Among them, except for No.7, the acid used to adjust pH in other experiments is phosphoric acid.

From Example 3, it can be seen that using weakly acidic magnesium chloride solutions with different pH to transform the saturated lithium adsorbents in a certain sulfate brine environment results in certain differences in the desorption capacity of the adsorbents.

### Example 4

Index of a certain carbonate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 9.77 | 68.9 | 0.37 | 0.92 | 1.03 | 94 | 3.54 | 23.4 | 9.4 |

The aluminum-based lithium adsorbent prepared in Example 9 of Patent CN102631897B was saturated with the aforementioned brine for adsorption. The experimental results showed that the adsorption capacity of the adsorbent was 3.57g/L, and the following experiments were conducted to compare the desorption effects of the adsorbents.

| No. | Comparison conditions | Lithium concentration in the desorption solution |
|---|---|---|
| 1 | 3BV of the 150g/L sodium chloride with pH of 7 is used for transformation, and | 0.94g/L |
| | then 8BV of pure water is used for desorption. | |
| 2 | 3BV of the acidic 150g/L sodium chloride with pH of 6.2 is used for transformation, and then 8BV of pure water is used for desorption. | 1.67g/L |
| 3 | 3BV of the acidic 150g/L sodium chloride with pH of 5.8 is used for transformation, and then 8BV of pure water is used for desorption. | 2.54g/L |
| 4 | 3BV of the acidic 150g/L sodium chloride with pH of 5.5 is used for transformation, and then 8BV of pure water is used for desorption. | 3.02g/L |
| 5 | 3BV of the acidic 150g/L sodium chloride with pH of 5 is used for transformation, and then 8BV of pure water is used for desorption. | 3.55g/L |
| 6 | 3BV of the acidic 150g/L sodium chloride with pH of 4.7 is used for transformation, and then 8BV of pure water is used for desorption. | 3.5 1 g/L |
| 7 | 3BV of the acidic 150g/L sodium chloride with pH of 4.3 is used for transformation, and then 8BV of pure water is used for desorption. | 3.54g/L |
| 8 | 3BV of the acidic 150g/L sodium chloride with pH of 4 is used for transformation, and then 8BV of pure water is used for desorption. | 3.49g/L |
| 9 | 3BV of the acidic 150g/L sodium chloride with pH of 3 is used for transformation, and then 8BV of pure water is used for desorption. | 3.52g/L |

Among them, hydrochloric acid is used as the acid for pH adjustment.

From Example 4, it can be seen that using weakly acidic sodium chloride solutions with different pH to transform the saturated lithium adsorbents in a certain carbonate brine environment results in certain differences in the desorption capacity of the adsorbents.

### Example 5

Index of a certain sulfate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 5.5 | 77 | 8.2 | 1.3 | 0.82 | 104 | 35.54 | 1.07 | 8.2 |

The aluminum-based lithium adsorbent prepared in Example 10 of Patent CN102631897B was saturated with the aforementioned brine. The experimental results show that the adsorption capacity of the adsorbent is 3.2g/L, and the following experiments were conducted to compare the desorption effects of the adsorbents.

| No. | Comparison conditions | Lithium concentration in the desorption solution |
|---|---|---|
| 1 | The pH of saturated copper chloride solution was adjusted to 4.8 with boric acid, the adsorbent is transformed with 2BV of the solution, and 10BV of pure water is used for desorption. | 2.85g/L |
| 2 | The pH of saturated copper chloride solution was adjusted to 4.8 with hydrochloric acid, the adsorbent is transformed with 2BV of the solution, and 10BV of pure water is used for desorption. | 3.01g/L |
| 3 | The pH of saturated copper chloride solution was adjusted to 4.8 with sulfuric acid, the adsorbent is transformed with 2BV of the solution, and 10BV of pure | 3.02g/L |
| | water is used for desorption. | |
| 4 | The pH of saturated copper chloride solution was adjusted to 4.8 with nitric acid, the adsorbent is transformed with 2BV of the solution, and 10BV of pure water is used for desorption. | 2.87g/L |
| 5 | The pH of saturated copper chloride solution was adjusted to 4.8 with phosphoric acid, the adsorbent is transformed with 2BV of the solution, and 10BV of pure water is used for desorption. | 2.62g/L |
| 6 | The pH of saturated copper chloride solution was adjusted to 4.8 with acetic acid, the adsorbent is transformed with 2BV of the solution, and 10BV of pure water is used for desorption. | 2.45g/L |
| 8 | The pH of saturated copper chloride solution was adjusted to 4.8 with formic acid, the adsorbent is transformed with 2BV of the solution, and 10BV of pure water is used for desorption. | 2.78g/L |

Among them, sulfuric acid is used as the acid for pH adjustment.

From Example 5, it can be seen that the prepared weakly acidic copper chloride solutions using different acids in a certain sulfate brine environment can transform the resin and desorb it well.

### Example 6

Index of a certain carbonate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 9.77 | 68.9 | 0.37 | 0.92 | 1.03 | 94 | 3.54 | 23.4 | 9.4 |

The aluminum-based lithium adsorbent prepared in Example 10 of Patent CN102631897B was saturated with the aforementioned brine for adsorption. The experimental results showed that the adsorption capacity of the adsorbent was 3.57g/L, and the following experiments were conducted respectively to compare the desorption effects of the adsorbents.

| No. | Comparison conditions | Lithium concentration in the desorption solution |
|---|---|---|
| 1 | The pH of 200g/L of sodium chloride solution was adjusted to 4 with boric acid, the adsorbent is transformed with 4BV of the solution, and 15BV of pure water is used for desorption. | 3.16g/L |
| 2 | The pH of 200g/L of sodium chloride solution was adjusted to 4 with hydrochloric acid, the adsorbent is transformed with 4BV of the solution, and 15BV of pure water is used for desorption. | 3.51g/L |
| 3 | The pH of 200g/L of sodium chloride solution was adjusted to 4 with sulfuric acid, the adsorbent is transformed with 4BV of the solution, and 15BV of pure water is used for desorption. | 3.49g/L |
| 4 | The pH of 200g/L of sodium chloride solution was adjusted to 4 with nitric acid, | 3.31g/L |
| | the adsorbent is transformed with 4BV of the solution, and 15BV of pure water is used for desorption. | |
| 5 | The pH of 200g/L of sodium chloride solution was adjusted to 4 with phosphoric acid, the adsorbent is transformed with 4BV of the solution, and 15BV of pure water is used for desorption. | 3.14g/L |
| 6 | The pH of 200g/L of sodium chloride solution was adjusted to 4 with acetic acid, the adsorbent is transformed with 4BV of the solution, and 15BV of pure water is used for desorption. | 2.56g/L |
| 8 | The pH of 200g/L of sodium chloride solution was adjusted to 4 with formic acid, the adsorbent is transformed with 4BV of the solution, and 15BV of pure water is used for desorption. | 2.89g/L |

From Example 6, it can be seen that the prepared weakly acidic potassium chloride solutions using different acids in a carbonate brine environment can transform the resin and desorb it well.

### Example 7

Index of a certain sulfate brine:

| raw materials | K⁺ | Na⁺ | Mg²⁺ | Ca²⁺ | Li⁺ | Cl⁻ | SO₄²⁻ | CO₃²⁻ | pH |
|---|---|---|---|---|---|---|---|---|---|
| content (g/L) | 5.5 | 77 | 8.2 | 1.3 | 0.82 | 104 | 35.54 | 1.07 | 8.2 |

The operating process parameters are as follows:
Adsorption zone: a certain sulfate brine with a single column feed volume of 4BV and a feed flow rate of 4BV/h is fed into the adsorption zone, with the outlet of the adsorption zone going to an adsorption tail liquid tank;
Transformation zone: 31% of industrial hydrochloric acid is used to adjust the pH of 300g/L of magnesium chloride solution to 4.0-4.5 to form a transformation liquid, and 5BV of the transformation liquid is introduced the transformation zone at a flow rate of 5BV/h;
Rinsing area: 1.2BV of rinsing water is fed into the rinsing area at a flow rate of 1.2BV/h, and the outlet of the rinsing area goes to a brine raw material tank;
Desorption area: pure water is used at a flow rate of 3.5BV/h to desorb the resin in the desorption area, with the first 1.2BV going to a rinsing water tank and the last 2.3BV going to a qualified liquid tank;
Material top water area: the adsorption tail liquid is used to reverse replace the resin column, and the recovered water enters a pure water tank;
Switching time: 1 hour;
Resin used: Lithium adsorbent LXL-10A (aluminum-based lithium adsorbent) produced by SUNRESIN NEW MATERIALS CO.LTD.;

The above raw materials and processes are used to further test the continuous ion exchange processes with different combinations:

| Resin column assembly in adsorption zone | Resin column assembly in the transformation zone | Resin column assembly in the rinsing area | Resin column assembly in the desorption area | Resin column assembly in the material top water area | Lithium concentration in qualified solution(g/L) |
|---|---|---|---|---|---|
| 6 sets in parallel, each set running with a single column | 4 sets in parallel, each set in 3-stage series | 3 sets in parallel, each set in 2-stage series | 4 sets in parallel, each set running with a single column | 1 set operation, each set in 2-stage series | 0.83 |
| 3 sets in parallel, each set in 3-stage series | 1 set operation, each set in 5-stage series | 1 set operation, each set in 9-stage series | 1 set operation, each set in 4-stage series | 2 sets in parallel, each set in 1-stage series | 0.74 |
| 3 sets in parallel, each set in 2-stage series | 1 set operation, each set in 8-stage series | 1 set operation, each set in 6-stage series | 1 set operation, each set in 5-stage series | 3 sets in parallel, each set in 2-stage series | 0.77 |
| 1 set operation, each set in 1-stage series | 1 set operation, each set in 1-stage series | 1 set operation, each set in 1-stage series | 1 set operation, each set in 1-stage series | 1 set operation, each set in 4-stage series | 0.42 |
| 2 sets in parallel, each set in 3-stage series | 1 set operation, each set in 3-stage series | 2 sets in parallel, each set in 4-stage series | 3 sets in parallel, each set in 2-stage series | 5 sets in parallel, each set in 1-stage series | 0.69 |
| 7 sets in parallel, each set in 3-stage series | 2 sets in parallel, each set in 4-stage series | 3 sets in parallel, each set in 4-stage series | 3 sets in parallel, each set in 4-stage series | 2 sets in parallel, each set in 3-stage series | 0.91 |

Various different process combinations can produce qualified solutions, but the concentration of qualified solutions varies due to differences in process combinations.

The above examples are further explanations of the present patent application in order to better understand the present patent, and are not intended to limit the implementation of the present patent application.

## Claims

1. A lithium adsorption method in a carbonate-containing solution and/or a sulfate-containing solution, wherein the lithium adsorption method comprises: adsorbing lithium ions in a carbonate-containing solution and/or a sulfate-containing solution with an aluminum-based lithium adsorbent; then transforming the saturated adsorbent with a weakly acidic high concentration salt solution; and finally, restoring the adsorption performance of the adsorbent by using a low concentration salt solution or water for desorption, and entering the next cycle of operation.

2. The lithium adsorption method in a carbonate-containing solution and/or a sulfate-containing solution of claim 1, wherein the lithium adsorbent is derived from an aluminum-based lithium adsorbent prepared by the method provided in patent CN102631897B or a commercially available aluminum-based lithium adsorbent of the same type.

3. The lithium adsorption method in a carbonate-containing solution and/or a sulfate-containing solution of claim 1, wherein the weakly acidic high concentration salt solution is formed by dissolving one or more of chloride salt, sulfate salt and nitrate salt in water and adjusting the pH with an acid, wherein the chloride salt, sulfate salt and nitrate salt comprises zinc chloride, copper chloride, zirconia chloride, sodium chloride, potassium chloride, magnesium chloride, calcium chloride, aluminum chloride, magnesium ammonium sulfate, zinc sulfate, sodium sulfate, potassium sulfate, magnesium sulfate, copper sulfate, magnesium nitrate, sodium nitrate, potassium nitrate, calcium nitrate, copper nitrate, and zinc nitrate.

4. The lithium adsorption method in a carbonate-containing solution and/or a sulfate-containing solution of claim 1, wherein the transforming can adopt a weakly acidic high concentration salt solution with repeated cycles, the range of pH value of the weakly acidic high concentration salt solution is from pH 3 to pH 7, and preferably the range of pH value is from pH 4 to pH 6; and the concentration of the salt solution is greater than or equal to 150g/L, and preferably the concentration of the salt solution is greater than or equal to 200g/L.

5. The lithium adsorption method in a carbonate-containing solution and/or a sulfate-containing solution of claim 1, wherein the transformed lithium adsorbent can be desorbed using a low concentration salt solution with a salt solution concentration below 20g/L, preferably a salt solution concentration below 5g/L, and more preferably pure water for desorption to reduce the introduction of impurities.

6. The lithium adsorption method in a carbonate-containing solution and/or a sulfate-containing solution of claim 3, wherein the acid can be one or more of boric acid, hydrochloric acid, acetic acid, formic acid, sulfuric acid, nitric acid, phosphoric acid, adipic acid, glutaric acid, tartaric acid, oxalic acid, malic acid, benzoic acid, salicylic acid, caffeic acid, and citric acid.

7. The lithium adsorption method in a carbonate-containing solution and/or a sulfate-containing solution of claim 1, wherein a continuous ion exchange device mentioned in patent CN102031368B, entitled "continuous ion exchange device and method for extracting lithium from salt lake brine", can be used in this method so as to better achieve the objectives of the present technology, wherein the feed main pipe includes an adsorption feed main pipe, a transformation feed main pipe, and a rinsing feed main pipe, a desorption feed main pipe and a top water feed main pipe; wherein the resin column(s) in each step can be single-column for adsorption, parallel-column for adsorption, or series-column for adsorption, and for the number of resin column(s), single-column mode or multi-column mode can be adopted according to production capacity and other requirements.

8. The lithium adsorption method in a carbonate-containing solution and/or a sulfate-containing solution of claim 2, wherein the aluminum-based lithium adsorbent prepared by the method provided in patent CN102631897B is prepared by the following steps:
① preparation of precursor:
preparing precursor for lithium adsorbent resin - a molecular sieve or an ion sieve type lithium adsorbent precursor;
a method for preparing the molecular sieve type lithium adsorbent precursor comprises: firstly, preparing metal oxygen-containing compounds into spherical bead particles, and then using an activation process to make them have the function of adsorbing lithium ions, wherein the molar ratio of lithium to other metals in the lithium adsorbent formed after activation is between (1-5): 1;
② preparation of a dispersed phase:
mixing evenly the precursor prepared above with an adhesive and a pore forming agent to prepare a dispersed phase; wherein the amount of the adhesive added accounts for 10% to 80% of the total weight of the dispersed phase; and the pore forming agent accounts for 10% to 200% of the total weight of a monomer;
when the adhesive is a polymerizable monomer, adding an initiator, a thickener, and a pore forming agent at the same time, wherein the added initiator accounts for 0.1% to 5% of the total weight of the monomer; the proportion of the thickener accounts for 1% to 10% of the total weight of the dispersed phase; and the pore forming agent accounts for 10% to 200% of the total weight of the monomer;
when the adhesive is a polymer with high molecular weight, adding a curing agent or controlling the temperature to cure it, wherein the amount of the curing agent added accounts for 0.001% to 2% of the weight of the adhesive; when the adhesive is a small molecule substance with two self-condensable functional groups or a combination of two small molecule substances with mutual-condensable functional groups, adding a catalyst, wherein the amount of the catalyst added accounts for 0.001% to 50% of the weight of the adhesive;
③ preparation of continuous phase:
preparing a continuous phase that is incompatible with the dispersed phase;
wherein the volume of the continuous phase is 1 to 10 times of the volume of the dispersed phase, with the addition amount of the dispersant accounting for 0.01% to 10% of the total weight of the continuous phase;
④ preparation and curing of lithium adsorbent resin:
adding the dispersed phase in step ② into the continuous phase prepared in step (3), adjusting the stirring rate so that the dispersed phase "suspends" in the continuous phase and disperses into spherical beads of appropriate size; after stabilization, maintaining the stirring rate unchanged, and curing the spherical beads into spherical particles by adjusting the temperature or adding a curing agent or a catalyst; wherein the particle size of the spherical particles is in a range from 0.3 millimeters to 2.0 millimeters;
(5) washing and treating:
filtering the cured spherical particles, and using solvents, acetone, ethanol, toluene, or gasoline, to wash the dispersant and the pore forming agent in the spherical particles; placing the washed spherical particles containing metal hydroxides in a lithium halide solution with a pH of 1.5 to 10, and performing activation treatment at 60°C to 120 °C to obtain a lithium adsorbent resin containing LiCl·mM(OH)₃·nH₂O matrix; alternatively, performing column treatment to a resin containing manganese dioxide, iron oxide, and titanium oxide as ion sieve type precursor with a solution having pH of 0 to 5, and then washing to neutral to obtain the ion sieve type lithium adsorbent resin.
